# EUROPEAN PATENT SPECIFICATION

(11) **EP 3 015 722 B1**
(45) Date of publication and mention of the grant of the patent: **31.05.2017**
(21) Application number: 15181844.0
(22) Date of filing: 20.08.2015
(51) Int. Cl.: F16C 7/02, F16B 33/00, F16B 33/06

(54) **CONNECTING ROD, INTERNAL COMBUSTION ENGINE AND AUTOMOTIVE VEHICLE**
VERBINDUNGSSTANGE, BRENNKRAFTMASCHINE UND KRAFTFAHRZEUG
BIELLE, MOTEUR À COMBUSTION INTERNE ET VÉHICULE AUTOMOBILE

(30) Priority: 28.10.2014 JP 2014219578
(43) Date of publication of application: 04.05.2016
(73) Proprietor: Yamaha Hatsudoki Kabushiki Kaisha, Shizuoka-ken Shizuoka 438-8501 (JP)
(72) Inventor: Miura, Tetsu, Shizuoka-ken, Shizuoka (JP)
(74) Representative: Moreland, David

(56) References cited:
- EP-A2- 1 724 476
- US-A1- 2014 053 798

## Description

### FIELD OF INVENTION

The present invention relates to a connecting rod, e.g. an engine connecting rod, and more particularly to a split-type connecting rod which is made of a titanium alloy. The present invention also relates to an internal combustion engine and an automotive vehicle, such as a straddle-type vehicle or saddle-ride type vehicle, that includes such a connecting rod.

### BACKGROUND TO INVENTION

Conventionally, steels have widely been used as the material of connecting rods (also known as "con-rods"). In recent years, use of a titanium alloy has been proposed in order to reduce the weight of a connecting rod (see, for example, Japanese Laid-Open Patent Publication No. 2007-3000 (hereinafter "Patent Document 1")). Patent Document 1 discloses a split-type (also called "assembled type") connecting rod which is made of a titanium alloy.

In a split-type connecting rod, the big end is split into two portions (a rod portion and a cap portion). The cap portion is coupled to the rod portion by using bolts. In the connecting rod disclosed in Patent Document 1, nuts are not used for coupling the cap portion, and the bolts are directly screwed into the bolt holes of the big end, which have internal threads.

Bolts for use in connecting rods are steel high-strength bolts (of strength class 12.9 or 14.9), which generate a rather high axial force (specifically, 40 kN to 50 kN) for their size (i.e. M8 or M9). Therefore, when fastening each bolt, galling (seizing) is likely to occur at the screw surface or the bearing surface. Moreover, since a titanium alloy is susceptible to seizing, directly screwing a bolt into a connecting rod made of a titanium alloy results in a higher likelihood of seizing during fastening.

Therefore, for a connecting rod made of a titanium alloy, it has been conventional practice to employ steel nuts instead of directly screwing the bolts (i.e. steel bolts are fastened to steel nuts), or apply molybdenum grease (i.e. a grease containing molybdenum disulfide) on the bolt surface in order to prevent seizing during direct screwing of bolts.

However, using nuts increases the weight of the entire connecting rod as compared to when the bolts are directly screwed.

Moreover, when a molybdenum grease is to be applied, there are cases which make the application of the grease difficult to perform while appropriately managing the amount of highly-viscous grease during a mass production process, such that the applied amount may fluctuate. When the applied amount fluctuates, the friction coefficient will fluctuate, thus resulting in large fluctuation in the snug torque (i.e. the torque which is needed to bring the screw surface in close contact with the bearing surface) as well as in the bolt yield point. This leads to fluctuations in the axial force; i.e. stable axial force cannot be obtained.

US2014/053798 does not contain any teaching relating to titanium connecting rods but does describe a connecting rod that includes a connecting rod portion and a bearing cap. The rod portion and bearing cap are connected by a fastener. The fastener may be coated with a manganese phosphate coating.

EP1 724 476 teaches of a titanium connecting rod.

The present invention has been made in view of the above problems, and an objective of at least one embodiment of at least one aspect of the present invention is to provide a split-type connecting rod made of a titanium alloy, the split-type connecting rod being able to generate a stable axial force without an unwanted increase in weight when its cap portion is coupled with bolts.

It is an object of at least one embodiment of at least one aspect of the present invention to obviate or at least mitigate one or more problems or disadvantages in the prior art.

### SUMMARY OF INVENTION

Various aspects of the present invention are defined in the independent claims. Some preferred features are defined in the dependent claims.

According to a first aspect of the present invention is a connecting rod. The connecting rod may be a connecting rod of a split type. The connecting rod may comprise or be formed or made of a titanium alloy. The connecting rod may comprise: a rod main body; a small end which may be provided at one end of the rod main body; and/or a big end, which may be provided at another end of the rod main body. The big end may be split into a rod portion, which may continue from the other end of the rod main body, and a cap portion, which may be coupled, coupable or configured to be coupled to the rod portion., The connecting rod may further comprise at least one fixing member, such as a bolt, for coupling the cap portion to the rod portion. The fixing member, e.g. bolt, may include a main body, e.g. a bolt main body, which may comprise or be formed or made of steel. The bolt may comprise a phosphate coating, which may be provided on at least part or all of the surface of the main body, e.g. the bolt main body.

The phosphate coating comprises a zinc phosphate coating.

The bolt may have no grease layer on the phosphate coating.

The phosphate coating may be located at, or comprised in or be provided on, an outermost surface of the fixing member, e.g. bolt.

The titanium alloy may be or comprise an alloy comprising titanium and one or both of aluminium and iron, such as Ti-5Al-1Fe alloy.

Oil or an oil layer or coating may be provided on at least part or all of the phosphate coating. The oil or the oil layer or coating may be or comprise a rust preventative oil.

Since the connecting rod may be a split-type connecting rod, the cap portion may be separate and/or seperable from the rod portion.

The fixing member, e.g. bolt, may comprise a threaded portion. The threaded portion may be provided on the main body, e.g. the bolt main body. At least one of the rod portion and/or the cap portion may comprise a threaded portion, e.g. an internally threaded portion, which may correspond to and/or be configred to engage with the threaded portion of the fixing member, e.g. the bolt.

An internal combustion engine according to a second aspect of the present invention may comprise a connecting rod of the above construction, i.e. accoding to the first aspect.

The engine may comprise a crankcase. The engine may comprise a cylinder block. The engine may comprise a cylinder head.

A crankshaft may be accommodated in the crankcase. The crankshaft may have a crankpin and a crank arm. The cylinder block may be provided above, e.g. higher than or directly above or overhead of, the crankcase. A piston may be provided inside a cylinder bore and may be configured to reciprocate within the cylinder bore. The cylinder head may be provided above, e.g. higher than or directly above or overhead of, the cylinder block. The cylinder head may at least partly define a combustion chamber. The cylinder head may at least partly define the combustion chamber in conjunction with the cylinder block and/or a piston intake valve. The piston intake valve may be provided within an intake port. An exhaust valve for enabling evacuation of the combustion chamber may be provided within an exhaust port. The piston and the crankshaft may be linked via the connecting rod. A piston pin of the piston may be inserted in a throughhole (e.g. a piston pin hole) of the small end of the connecting rod. The crankpin of the crankshaft may be inserted in a throughhole (e.g. a crankpin hole) of the big end, which may thus link the piston and the crankshaft together. A bearing metal may be provided between an inner peripheral surface of the through hole of the big end and the crankpin.

An automotive vehicle according to embodiment third aspect of the present invention may comprise an internal combustion engine of the above construction, i.e.
according to the second aspect. The automotive vehicle may be a saddle-ride or straddle-type vehicle, such as a motorcycle, scooter, moped, ATV, or snowmobile.

In the connecting rod according to an embodiment of the present invention, a phosphate coating may be provided on the surface of the bolt main body. The phosphate coating may prevent direct contact between the steel bolt main body and titanium alloy big end, which may thereby prevent seizing (galling) during fastening (direct screwing) of the bolts. In the connecting rod according to an embodiment of the present invention, since no nuts may be needed for coupling the cap portion, unwanted increases in weight may be prevented. Furthermore, there may not be a need to apply grease on the bolts, and thus fluctuations in axial force due to fluctuating amounts of applied grease may not occur. As a result, a stable axial force may be obtained.

A zinc phosphate coating may be suitably used for the phosphate coating.

To obtain a stable axial force, it may be preferable that the bolt has no grease layer on the phosphate coating.

To obtain a stable axial force, it may be preferable that the phosphate coating is located at the outermost surface of the bolt.

An alloy of or comprising titanium and aluminium and/or iron, such as, e.g. Ti-5Al-1 Fe alloy may be suitably used, as the titanium alloy that is the material of the connecting rod. Such an alloy, e.g. Ti-5Al-1Fe alloy, may excel in the balance between processibility and strength.

According to an embodiment of the present invention a connecting rod may generate a stable axial force without an unwanted increase in weight when its cap portion is coupled with bolts, and therefore may be suitably used in various internal combustion engines (engines) for automotive vehicles and other mechanical applications.

According to an embodiment of the present invention, there is provided a split-type connecting rod which may be made of a titanium alloy, the split-type connecting rod may be able to generate a stable axial force without an unwanted increase in weight when its cap portion is coupled with bolts.

These general and specific aspects may be implemented using a system, a method, and a computer program, and any combination of systems, methods, and computer programs.

Described herein by way of example only is a fixing member such as a bolt, which may be a fixing member for coupling a cap portion of a connecting rod to a rod portion of a connecting rod. The connecting rod may be or comprise a connecting rod as described above, e.g. according to the first aspect.

The fixing member, e.g. bolt, may comprise a main body, such as a bolt main body, which may be made of steel. The fixing member, e.g. bolt may comprise a threaded portion. The fixing member, e.g. bolt may comprise a phosphate coating which may be provided on at least part or all of a surface of the main body, e.g. the bolt main body, and/or the threaded portion. The phosphate coating may be or comprise a zinc phosphate coating.

Described herein by way of example only is a method of forming a fixing member, e.g. a fixing member as described above in relation to the fourth aspect. The fixing member may be or comprise a bolt. The fixing member, e.g. the bolt, may be a fixing member or bolt for coupling a cap portion of a connecting rod to a rod portion of a connecting rod. The connecting rod may be or comprise a connecting rod as described above, e.g. in relation to the first aspect. The fixing member, e.g. bolt, may comprise a main body, such as a bolt main body, which may be made of steel.

The method may comprise applying a phosphate coating on at least part or all of a surface of the main body, e.g. the bolt main body, such as at least to the threaded portion. The phosphate coating may be or comprise a zinc phosphate coating. Applying the phosphate coating may comprise cleaning the surface of the main body, e.g. the bolt main body, with a degreasing agent, such as an alkaline degreasing agent. Applying the phosphate coating may comprise rinsing at least part or all of the fixing member (e.g. washing with water). Applying the phosphate coating may comprise placing at least part or all of the fixing member in a phosphate treatment bath and may comprise subsequently rinsing at least part or all of the fixing member (e.g. washing with water). Applying the phosphate coating may comprise drying at least part or all of the fixing member, e.g. with hot/warm air.

Additional benefits and advantages of the disclosed embodiments will be apparent from the specification and Figures. The benefits and/or advantages may be individually provided by the various embodiments and features of the specification and drawings disclosure, and need not all be provided in order to obtain one or more of the same.

It will be appreciated that features analogous to those described in relation to any of the above aspects may be individually and separably or in combination applicable to any of the other aspects.

Apparatus features analogous to, or configured to implement, those described above in relation to a method and method features analogous to the use and fabrication of those described above in relation to an apparatus are also intended to fall within the scope of the present invention.

### BRIEF DESCRIPTION OF DRAWINGS

An embodiment of the present invention will now be described, by way of example only, with reference to the accompanying drawings, which are:
- **Figures 1A and 1B**: diagrams showing a connecting rod 1 according to an embodiment of the present invention, where Figure 1A is a plan view showing the entire connecting rod 1, and Figure 1B is a partial plan view showing the neighbourhood of a big end 30 of the connecting rod 1;
- **Figure 2**: Portion (a) is a front view of a bolt 40 of the connecting rod 1, portion (b) is a plan view showing the bolt 40 as viewed from its head 41, and portion (c) is a cross-sectional view showing the surface vicinity of the bolt 40;
- **Figure 3A**: a graph showing a relationship in an Example 1 between: a friction coefficient µs of the screw surface, a friction coefficient µw of the bearing surface, and a total friction coefficient µ; and the turned angle [deg]. Figure 3B is a graph showing a relationship in Example 1 between: a total torque [N·m] and an axial force [kN]; and a turned angle [deg];
- **Figure 4A**: a graph showing a relationship in a Comparative Example 1 between: a friction coefficient µs of the screw surface, a friction coefficient µw of the bearing surface, and a total friction coefficient µ; and the turned angle [deg];
- **Figure 4B**: a graph showing a relationship in Comparative Example 1 between: a total torque [N·m] and an axial force [kN]; and a turned angle [deg];
- **Figure 5**: a graph showing changes in the total friction coefficient µ when the same bolt is repeatedly fastened in Example 1 and in Comparative Examples 2 to 9;
- **Figure 6**: a graph showing changes in the total friction coefficient µ when the same bolt 40 is repeatedly fastened in Examples 2, 3 and 4.
- **Figure 7**: a cross-sectional view schematically showing an engine 100 including a connecting rod 1 according to an embodiment of the present invention; and
- **Figure 8**: a side view schematically showing a motorcycle including the
engine 100 shown in Figure 7.

### DETAILED DESCRIPTION OF DRAWINGS

Hereinafter, with reference to the drawings, embodiments of the present invention will be described. Note that the present invention is not limited to the following embodiments.

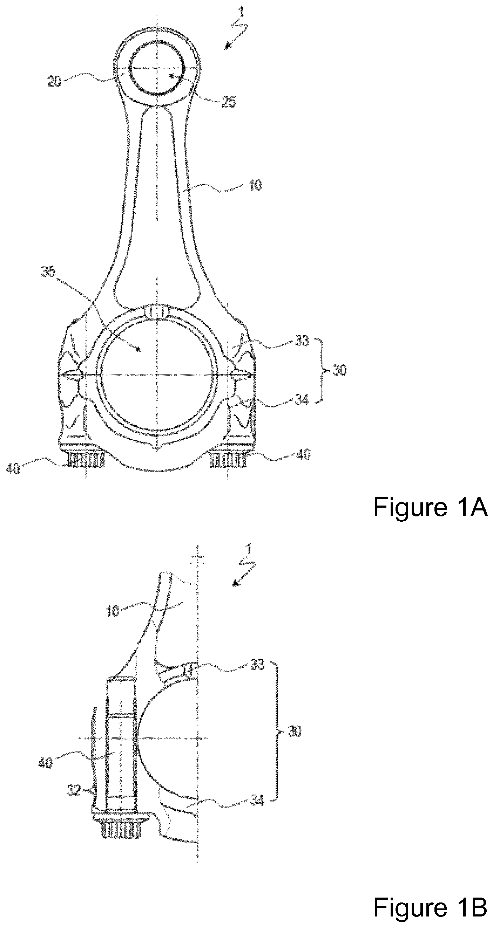

Figures 1A and 1B show a connecting rod 1 according to an embodiment of the present invention. Figure 1A is a plan view showing the entire connecting rod 1, and Figure 1B is a partial plan view showing the neighbourhood of a big end 30 of the connecting rod 1.

The connecting rod 1 is made of a titanium alloy (whereas bolts 40 described later are made of steel). Ti-5Al-1Fe alloy, for example, can be suitably used as the titanium alloy. Ti-5Al-1Fe alloy is a titanium alloy containing about 5 mass% of Al and about 1 mass% of Fe. Ti-5Al-1 Fe alloy excels in the balance between processibility and strength. It will be appreciated that the material of the connecting rod 1 is not limited to Ti-5Al-1 Fe alloy, but titanium alloys of various known compositions (e.g. an alloy of or comprising titanium and aluminium and/or vanadium, such as Ti-6Al-4V alloy, i.e. having 6 mass % aluminium and 4 mass % vanadium) can be used.

As shown in Figures 1A and 1B, the connecting rod 1 includes a bar-like rod main body 10, a small end 20 provided at one end of the rod main body 10, and a big end 30 provided at another end of the rod main body 10.

The small end 20 has a throughhole (called a "piston pin hole") 25 for allowing a piston pin to extend therethrough. On the other hand, the big end 30 has a through hole (called a "crankpin hole") 35 for allowing a crankpin to extend therethrough.

The big end 30 is split into a rod portion 33 which continues from the other end of the rod main body 10, and a cap portion 34 which is coupled or coupable to the rod portion 33. In other words, the connecting rod 1 is a split-type connecting rod. The split-type connecting rod 1 is formed by a fracture technique, for example. The fracture technique is a technique of integrally forming a big end 30 and then splitting the big end 30 into a rod portion 33 and a cap portion 34 via brittle fracture. The split-type connecting rod 1 may also be formed by other techniques. Specifically, the rod portion 33 and the cap portion 34 may be formed as separate pieces, or, the big end 30 may be integrally formed and then cut up via machining.

The connecting rod 1 further includes bolts 40 with which the cap portion 34 is coupled to the rod portion 33. The big end 30 has bolt holes 32 which are internally threaded to allow the bolts 40 to be directly screwed to the big end 30. In other words, no nuts are used for coupling the cap portion 34 via the bolts 40.

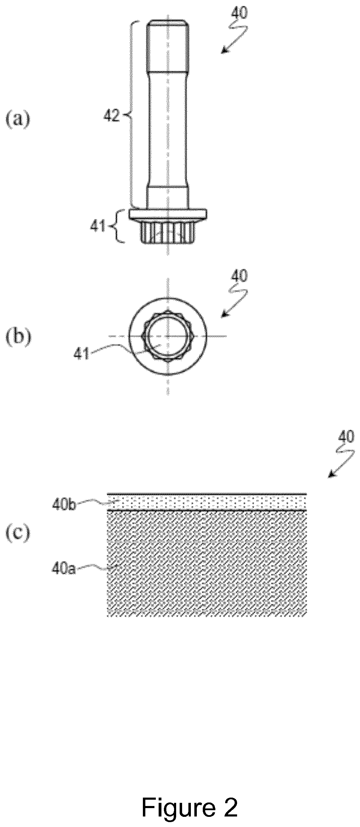

Now, with reference to Figure 2, a specific construction of each bolt 40 will be described. Figure 2(a) is a front view of a bolt 40, and Figure 2(b) is a plan view showing the bolt 40 as viewed from its head 41. Figure 2(c) is a cross-sectional view showing the surface vicinity of the bolt 40.

As shown in (a) and (b) of Figure 2, the bolt 40 is composed of a head 41 and an axis portion 42. An external thread is formed in at least a portion of the outer peripheral surface of the axis portion 42.

Moreover, as shown in Figure 2(c), the bolt 40 has a bolt main body 40a, which is made of a steel, and a phosphate coating 40b on the surface of the bolt main body 40a.

There is no particular limitation to the composition of the steel which is the material of the bolt main body 40a. Steels of various compositions that have been proposed for bolts, and especially high-strength bolts, can be suitably used.

The phosphate coating 40b is chemically (i.e. via chemical conversion coating) formed on the surface of the bolt main body 40a by using a phosphate solution. Typically, the phosphate coating 40b is formed over the entire surface of the bolt main body 40a. Formation of the phosphate coating 40b can be performed through steps of (1) to (5) below, for example.
(1) cleaning the surface of the bolt main body 40a with an alkaline degreasing agent
(2) rinsing (washing with water)
(3) phosphate treatment bath
(4) rinsing (washing with water)
(5) drying with hot/warm air

Zinc phosphate coating can be suitably used as the phosphate coating 40b, for example. Manganese phosphate coating can also be suitably used. The thickness of the phosphate coating 40b is typically in the range of 3 µm to 5 µm.

Thus, in the connecting rod 1 according to an embodiment of the present invention, the phosphate coating 40b is provided on the surface of the bolt main body 40a. The phosphate coating 40b prevents direct contact between the steel bolt main body 40a and the titanium alloy big end 30, thereby preventing seizing (galling) during fastening (direct screwing) of the bolts 40. Moreover, since no nuts are needed for coupling the cap portion 34, unwanted increases in weight are prevented. Furthermore, there is no need to apply grease on the bolts 40, and thus fluctuations in axial force due to fluctuating amounts of applied grease do not occur. As a result, a stable axial force is obtained.

Now, some results of a detailed study by the inventor will be described, where various greases or various coatings were applied on the bolt surface. It was found through the inventors' study that, among various constructions, the construction featuring a phosphate coating provides the most stable axial force. In other words, formation of a phosphate coating is found to provide an idiosyncratic, distinctive or particularly beneficial effect. This will be specifically described below.

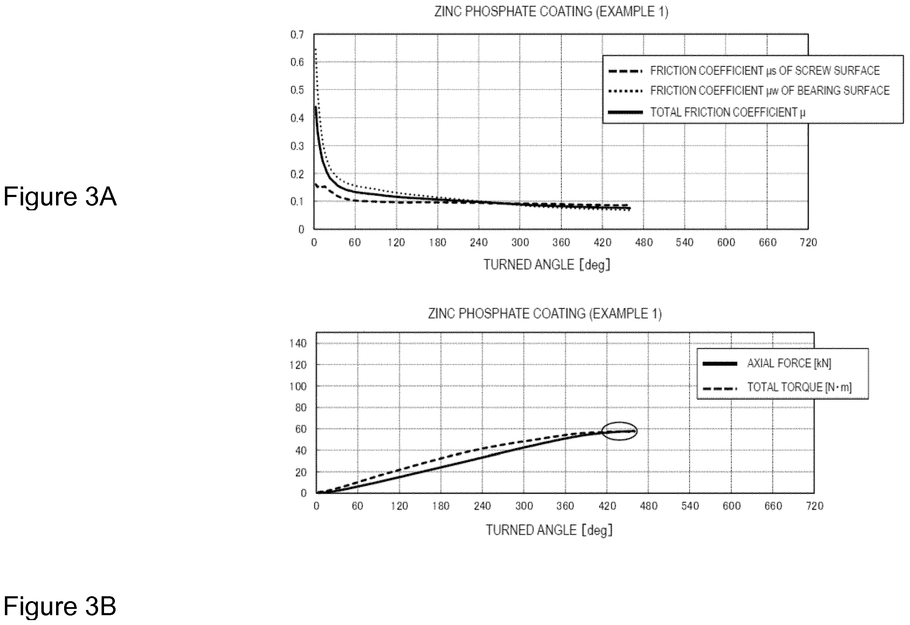

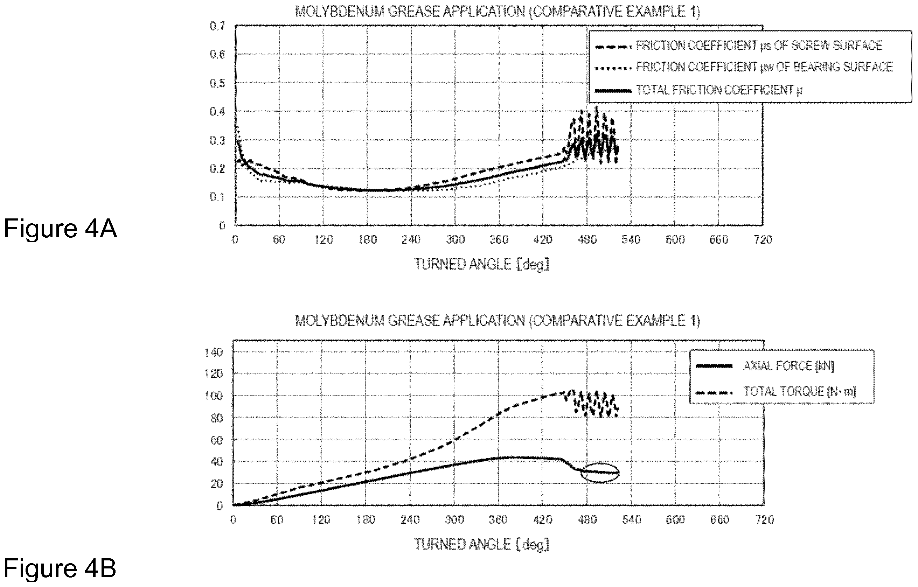

Figures 3A and 3B show results of a study in the case where zinc phosphate coating was provided as the phosphate coating 40b on the surface of the bolt main body 40a (Example 1). Figures 4A and 4B show results of a study in the case where molybdenum grease was applied on the bolt surface (Comparative Example 1).

Figure 3A and Figure 4A are graphs each showing a relationship between: a friction coefficient µs of the screw surface, a friction coefficient µw of the bearing surface, and a total friction coefficient µ; and the turned angle [deg]. Figure 3B and Figure 4B are graphs each showing a relationship between: a total torque [N·m] and an axial force [kN]; and a turned angle [deg].

From a comparison between Figures 3A and 3B and Figures 4A and 4B, it can be seen that Example 1 achieves a higher axial force than does Comparative Example 1 (especially note the region in an elongated circle in Figure 3B and Figure 4B).

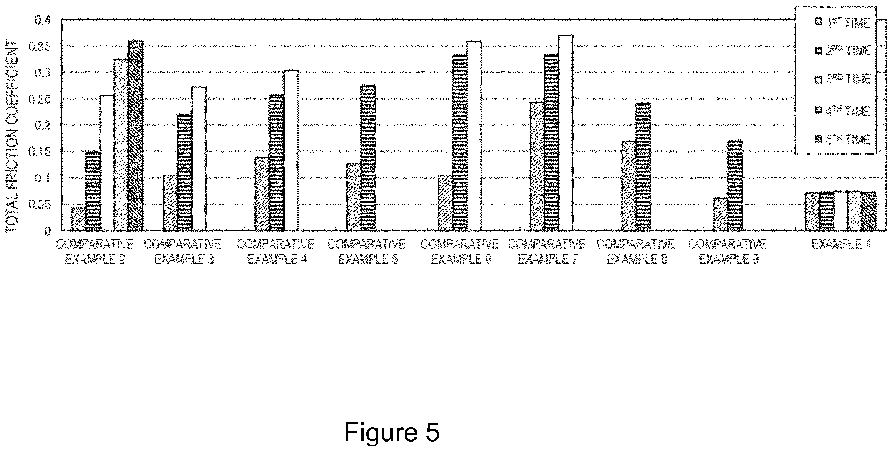

Figure 5 shows changes in the total friction coefficient µ when the same bolt is repeatedly fastened, in Example 1 and in cases where a dry lubricant coating containing molybdenum disulfide is formed on the bolt surface (Comparative Examples 2 to 9). Comparative Examples 2 to 9 featured dry lubricant coatings with mutually different specifications.

As can be seen from Figure 5, in Comparative Examples 2 to 9, the total friction coefficient µ significantly increased as repetitive fastening was performed. On the other hand, in Example 1, the total friction coefficient µ was essentially constant even with repeated fastening. This indicates that the connecting rod 1 according to an embodiment of the present invention provides an essentially constant axial force even through repeated fastening of the bolts 40.

Although Figure 2(c) shows a construction where no other coating or layer is additionally formed on the phosphate coating 40b (i.e. the phosphate coating 40b is located at the outermost surface of the bolts 40), embodiments of the present invention are not limited to this construction. For example, a rust preventive oil may be applied on the phosphate coating 40b (i.e. a rust preventive oil layer may be formed). In Example 1, whose study results are shown in Figure 3 and Figure 5, a rust preventive oil is applied on the zinc phosphate coating.

In order to better prevent seizing, a grease layer (e.g. a molybdenum grease layer) may be provided on the phosphate coating 40b. However, when a grease layer is provided, fluctuations in axial force may occur unless the applied amount of grease is appropriately managed. Therefore, from the standpoint of obtaining a stable axial force, it is preferable that the bolts 40 do not have any grease layer on the phosphate coating 40b. In the case where the bolts 40 do not have a grease layer, the grease application step is naturally omitted from the production of the connecting rod 1. As has already been described, there are cases which make the application actually difficult to perform while appropriately managing the amount of highly-viscous grease during a mass production process; thus, omission of the grease application step may make for a simplified production of the connecting rod 1. Moreover, a dry lubricant coating (e.g. a dry lubricant coating containing molybdenum disulfide) may be provided on the phosphate coating 40b. However, according to the results of the inventors' study, the construction which lacked a dry lubricant coating on the phosphate coating 40b provided a more stable axial force than was provided by any construction in which a dry lubricant coating was provided on the phosphate coating 40b. In other words, from the standpoint of obtaining a stable axial force, it is preferable that the bolts 40 do not have a dry lubricant coating on the phosphate coating 40b. As can be seen from these facts, from the standpoint of obtaining a stable axial force, it is preferable that the bolts 40 have neither a grease layer nor a dry lubricant coating on the phosphate coating 40b (i.e. that the phosphate coating 40b is located at the outermost surface of the bolts 40).

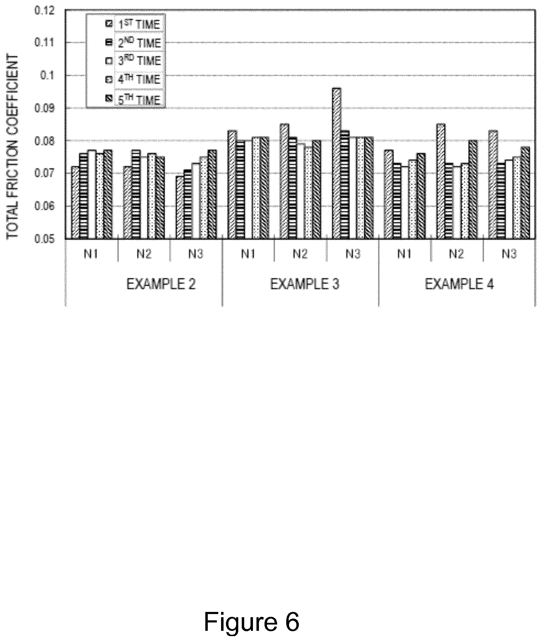

Figure 6 shows changes in the total friction coefficient µ when the same bolts 40 is repeatedly fastened, in the case where nothing was applied on the zinc phosphate coating (Example 2), the case where an oil containing molybdenum disulfide was applied on the zinc phosphate coating (Example 3), and the case where an engine oil (viscosity: 10W-40) was applied on the zinc phosphate coating (Example 4). In each of Examples 2, 3 and 4, three bolts 40 (respectively designated N1, N2 and N3) were studied.

As can be seen from Figure 6, in Example 2, the total friction coefficient µ was more stable than in Examples 3 and 4. This also indicates that, from the standpoint of obtaining a stable axial force, it is preferable that no other coating or layer is additionally provided on the phosphate coating 40b. As for the rust preventive oil, however, there was little unfavorable influence on obtaining a stable axial force even if it was applied on the phosphate coating 40b. Although the reason thereof is not clear, the rust preventive oil in the aforementioned example (Example 1) was quick to dry and had low viscosity, so that the rust preventive oil may have soon dried after permeating the porous zinc phosphate coating, whereby only a solid component was presumably left. If any liquid component is left, when a portion of the zinc phosphate coating peels off, the peeled pieces will drift in the liquid component, thus abrading the coating. On the other hand, when only solid components are left, even if the zinc phosphate coating partially peels off, the peeled pieces will presumably enter into the pores of the porous zinc phosphate coating, thereby not promoting abrasion of zinc phosphate coating.

As has already been described, a zinc phosphate coating or a manganese phosphate coating can, for example, be used as the phosphate coating 40b, but any other phosphate coating may also be used.

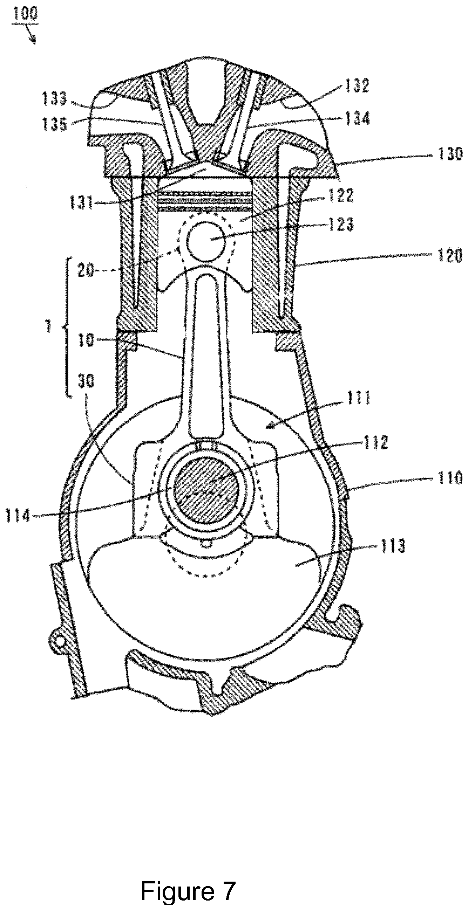

As described above, the connecting rod 1 according to an embodiment of the present invention can generate a stable axial force without an unwanted increase in weight, when coupling the cap portion 34 with the bolts 40. The connecting rod 1 according to an embodiment of the present invention is widely used in various internal combustion engines (engines) for automotive vehicles or other mechanical applications. Figure 7 shows an example of an engine 100 including a connecting rod 1 which has been produced by the production method according to the present embodiment.

The engine 100 includes a crankcase 110, a cylinder block 120, and a cylinder head 130.

A crankshaft 111 is accommodated in the crankcase 110. The crankshaft 111 has a crankpin 112 and a crank arm 113.

A cylinder block 120 is provided above the crankcase 110. A piston 122 is allowed to reciprocate inside the cylinder bore.

A cylinder head 130 is provided above the cylinder block 120. In conjunction with the cylinder block 120 and the piston 122, the cylinder head 130 defines a combustion chamber 131. An intake valve 134 for supplying vapor to the interior of the combustion chamber 131 is provided within the intake port 132, and an exhaust valve 135 for enabling evacuation of the combustion chamber 131 is provided within the exhaust port 133.

The piston 122 and the crankshaft 111 are linked via the connecting rod 1. Specifically, a piston pin 123 of the piston 122 is inserted in the through hole (piston pin hole) of the small end 20 of the connecting rod 1, and the crankpin 112 of the crankshaft 111 is inserted in the throughhole (crankpin hole) of the big end 30, thus linking the piston 122 and the crankshaft 111 together. A bearing metal 114 is provided between the inner peripheral surface of the throughhole of the big end 30 and the crankpin 112.

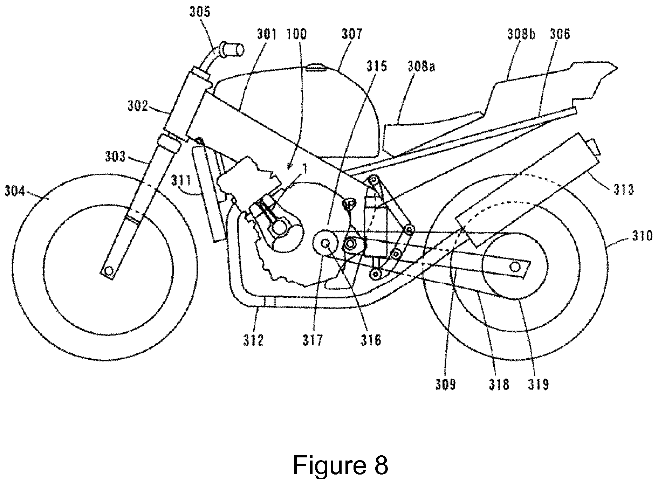

Figure 8 shows a motorcycle which incorporates the engine 100 shown in Figure 7. In the motorcycle shown in Figure 8, a head pipe 302 is provided at the front end of a body frame 301. To the head pipe 302, front forks 303 are attached so as to be capable of swinging in the right-left direction of the vehicle. At the lower end of the front forks 303, a front wheel 304 is supported so as to be capable of rotating.

A seat rail 306 is attached at an upper portion of the rear end of the body frame 301 so as to extend in the rear direction. A fuel tank 307 is provided on the body frame 301, and a main seat 308a and a tandem seat 308b are provided on the seat rail 306.

Rear arms 309 extending in the rear direction are attached to the rear end of the body frame 301. At the rear end of the rear arms 309, a rear wheel 310 is supported so as to be capable of rotating.

At the central portion of the body frame 301, the engine 100 shown in Figure 7 is held. The engine 100 incorporates the connecting rod 1 of the present embodiment. A radiator 311 is provided in front of the engine 100. An exhaust pipe 312 is connected to an exhaust port of the engine 100, and a muffler 313 is attached to the rear end of the exhaust pipe 312.

A transmission 315 is linked to the engine 100. Driving sprockets 317 are attached on an output axis 316 of the transmission 315. The driving sprockets 317 are linked to rear wheel sprockets 319 of the rear wheel 310 via a chain 318. The transmission 315 and the chain 318 function as a transmitting mechanism for transmitting the motive power generated in the engine 100 to the driving wheel.

In the connecting rod 1 according to an embodiment of the present invention, no nuts are needed for coupling the cap portion 34, thus making possible a corresponding weight reduction. As the weight of the connecting rod 1 is reduced, the crankshaft 111, balancer, crankcase 110, and the like can also be reduced in weight, thus making possible a weight reduction of the entire engine 100 and motorcycle. Moreover, reduction in the weight of the connecting rod 1 makes for higher mileage and higher output of the engine 100.

According to an embodiment of the present invention, there is provided a split-type connecting rod made of a titanium alloy, the split-type connecting rod being able to generate a stable axial force without an unwanted increase in weight when its cap portion is coupled with bolts. A connecting rod according to an embodiment of the present invention can be widely used in various internal combustion engines (e.g., an engine for an automotive vehicle).

While the present invention has been described with respect to exemplary embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the scope of the invention defined by the claims.

It will be appreciated that the term straddle-type vehicle or motor vehicle or automotive vehicle used herein, and as used in the art, is meant to include the following terms also used in the art:
saddled vehicle, saddle-ride type vehicle or motor vehicle, saddle-straddling type vehicle or motor vehicle, and includes: motorcycles and motorbikes as well as motor tricycles and All Terrain Vehicles (ATVs), scooters, mopeds and snowmobiles.

## Claims

1. A connecting rod (1) of a split type comprising or being made of a titanium alloy, the connecting rod (1) comprising:
a rod main body (10);
a small end (20) provided at one end of the rod main body (10); and
a big end (30) provided at another end of the rod main body (10),
the big end (30) being split into a rod portion (33) continuing from the other end of the rod main body (10), and a cap portion (34) coupled or adapted to be coupled to the rod portion (33), wherein
the connecting rod (1) further comprises at least one fixing member or bolt (40) for coupling the cap portion (34) to the rod portion (33),
the fixing member or bolt (40) including a main body (40a) made of steel, and a phosphate coating (40b) provided on the surface of the main body (40a); and
the phosphate coating (40b) is or comprises a zinc phosphate coating.

2. The connecting rod (1) of claim 1, wherein the fixing member or bolt (40) has no grease layer on the phosphate coating (40b).

3. The connecting rod (1) of claim 1 or claim 2, wherein the phosphate coating (40b) is located at the outermost surface of the fixing member or bolt (40).

4. The connecting rod (1) of any of claims 1 to 3, wherein the titanium alloy is Ti-5Al-1Fe alloy.

5. The connecting rod (1) of any preceding claim, wherein oil or an oil layer or coating is provided on at least part or all of the phosphate coating.

6. The connecting rod (1) of any preceding claim, wherein the fixing member or bolt (40) comprises a threaded portion and at least one of the rod portion (33) and/or the cap portion (34) comprises a threaded portion that corresponds to and/or is configred to engage with the threaded portion of the fixing member or bolt (40).

7. An internal combustion engine (100) comprising the connecting rod (1) of any preceding claim.

8. An automotive vehicle, such as a straddle-type vehicle, comprising the internal combustion engine (100) of claim 7.

## Patentansprüche

1. Pleuelstange (1) von einem geteilten Typ, die eine Titanlegierung umfasst oder aus derselben hergestellt ist, wobei die Pleuelstange (1) Folgendes umfasst:
einen Stangenhauptkörper (10),
ein Kolbenbolzenende (20), das an einem Ende des Stangenhauptkörpers (10) bereitgestellt wird, und
ein Kurbelwellenende (30), das an einem anderen Ende des Stangenhauptkörpers (10) bereitgestellt wird,
wobei das Kurbelwellenende (30) geteilt ist in einen Stangenabschnitt (33), der sich von dem anderen Ende des Stangenhauptkörpers (10) fortsetzt, und einen Kappenabschnitt (34), der an den Stangenabschnitt (33) gekoppelt oder dafür eingerichtet ist, an denselben gekoppelt zu werden, wobei
die Pleuelstange (1) ferner wenigstens ein Befestigungselement oder einen Bolzen (40) zum Koppeln des Kappenabschnitts (34) an den Stangenabschnitt (33) umfasst,
das Befestigungselement oder der Bolzen (40) einen Hauptkörper (40a), der aus Stahl hergestellt ist, und eine Phosphatbeschichtung (40b), die auf der Oberfläche des Hauptkörpers (40a) bereitgestellt wird, einschließt, und
die Phosphatbeschichtung (40b) eine Zinkphosphatbeschichtung ist oder umfasst.

2. Pleuelstange (1) nach Anspruch 1, wobei das Befestigungselement oder der Bolzen (40) keine Fettschicht auf der Phosphatbeschichtung (40b) aufweist.

3. Pleuelstange (1) nach Anspruch 1 oder Anspruch 2, wobei die Phosphatbeschichtung (40b) an der äußersten Oberfläche des Befestigungselements oder des Bolzens (40) angeordnet ist.

4. Pleuelstange (1) nach einem der Ansprüche 1 bis 3, wobei die Titanlegierung eine Ti-5Al-1Fe-Legierung ist.

5. Pleuelstange (1) nach einem der vorhergehenden Ansprüche, wobei Öl oder eine Ölschicht oder -beschichtung auf wenigstens einem Teil oder der Gesamtheit der Phosphatbeschichtung bereitgestellt wird.

6. Pleuelstange (1) nach einem der vorhergehenden Ansprüche, wobei das Befestigungselement oder der Bolzen (40) einen mit Gewinde versehenen Abschnitt umfasst und wenigstens einer von dem Stangenabschnitt (33) und/oder dem Kappenabschnitt (34) einen mit Gewinde versehenen Abschnitt umfasst, der dem mit Gewinde versehenen Abschnitt des Befestigungselements oder des Bolzens (40) entspricht und/oder dafür konfiguriert ist, mit demselben ineinanderzugreifen.

7. Verbrennungskraftmaschine (100), welche die Pleuelstange (1) nach einem der vorhergehenden Ansprüche umfasst.

8. Selbstfahrendes Fahrzeug, wie beispielsweise Fahrzeug vom Reitsitztyp, das die Verbrennungskraftmaschine (100) nach Anspruch 7 umfasst.

## Revendications

1. Bielle (1) à tête divisée comprenant ou étant constituée d'un alliage de titane, la bielle (1) comprenant :
un corps principal de bielle (10),
une petite extrémité (20) prévue à une extrémité du corps principal de bielle (10), et
une grosse extrémité (30) prévue à une autre extrémité du corps principal de bielle (10),
la grosse extrémité (30) étant divisée en une partie de bielle (33) continue depuis l'autre extrémité du corps principal de bielle (10) et une partie de chapeau (34) assemblée ou conçue pour être assemblée à la partie de bielle (33), dans laquelle
la bielle (1) comprend en plus au moins un élément ou un boulon de fixation (40) destiné à assembler la partie de chapeau (34) à la partie de bielle (33),
l'élément ou boulon de fixation (40) incluant un corps principal (40a) constitué d'acier, et un revêtement de phosphate (40b) appliqué sur la surface du corps principal (40a), et
le revêtement de phosphate (40b) est ou comprend un revêtement de phosphate de zinc.

2. Bielle (1) selon la revendication 1, dans laquelle l'élément ou boulon de fixation (40) ne comporte pas de couche de graisse sur le revêtement de phosphate (40b).

3. Bielle (1) selon l'une des revendications 1 ou 2, dans laquelle le revêtement de phosphate (40b) est disposé sur la couche extérieure de l'élément ou boulon de fixation (40).

4. Bielle (1) selon l'une quelconque des revendications 1 à 3, dans laquelle l'alliage de titane est un alliage Ti-5Al-1Fe.

5. Bielle (1) selon l'une des revendications précédentes, dans laquelle de l'huile ou une couche ou un revêtement d'huile est appliqué sur au moins une partie ou la totalité du revêtement de phosphate.

6. Bielle (1) selon l'une quelconque des revendications précédentes, dans laquelle l'élément ou boulon de fixation (40) comprend une partie filetée et au moins une de la partie de bielle (33) et/ou de la partie de chapeau (34) comprend une partie filetée qui correspond à et/ou est configurée pour mettre en prise la partie filetée de l'élément ou boulon de fixation (40).

7. Moteur à combustion interne (100) comprenant la bielle (1) selon l'une quelconque des revendications précédentes.

8. Véhicule automobile, notamment un véhicule à monture de selle comprenant le moteur à combustion interne (100) selon la revendication 7.
